# EUROPEAN PATENT SPECIFICATION

(11) **EP 3 154 145 B1**
(45) Date of publication and mention of the grant of the patent: **25.08.2021**
(21) Application number: 16382459.2
(22) Date of filing: 07.10.2016
(51) Int. Cl.: H02J 3/14, B60L 53/63, H02J 7/00

(54) **METHOD AND SYSTEM FOR CONSUMPTION CONTROL FOR CHARGERS OF ELECTRIC VEHICLES**
VERFAHREN UND SYSTEM ZUR VERBRAUCHSREGELUNG FÜR ELEKTROFAHRZEUG LADEGERÄTE
PROCÉDÉ ET SYSTÈME DE RÉGULATION DE LA CONSOMMATION POUR DES CHARGEURS DE VÉHICULES ÉLECTRIQUES

(30) Priority: 09.10.2015 ES 201531457
(43) Date of publication of application: 12.04.2017
(73) Proprietor: Comellas Cabeza, Joan, 08232 Viladecavalls (ES)
(72) Inventor: Comellas Cabeza, Joan, 08232 Viladecavalls (ES)
(74) Representative: Sugrañes, S.L.P.

(56) References cited:
- EP-A1- 2 744 070
- EP-A2- 2 426 004
- WO-A1-2013/157186
- WO-A2-2013/144947
- WO-A2-2013/179182

## Description

### Technical Field

The invention relates to a method and a consumption control system for chargers, particularly for chargers of electrical vehicles adapted to start a process of charging after connecting an electric vehicle to the charger that allows taking advantage of the power available in a mains, avoiding exceeding it.

### Background Art

Installations for the control of an electric vehicle charger are known, such as that described in patent US2011/0221393A1, which allows adjusting the consumption of the electric vehicle charger depending on the power available in the mains to which the charger is connected. However, these installations only provide for the existence of one single electric vehicle charger, therefore, they only require adjusting one single charger. In such installations it is not is possible to add new chargers, since each new charger would tend to regulate its consumption to consume the maximum power from the mains, without considering that there may exist another or even a plurality of other chargers that would cause that the total consumption widely exceed the power available in the mains, causing the actuation of the protection circuit breaker of said mains due to the over-consumption. Therefore, such installations do not allow increasing the number of chargers connected, taking into consideration that a charger can have outputs for one or two electric vehicles, which for a house may be enough but it does not allows its use in larger spaces in which the number of chargers connected to the mains can vary, such as an owners communal car park or a public car park.

To solve this problem, installations are known allowing the control of a plurality of chargers, such as those described in the patent US2013/0141042A1. However, these installations require a communication protocol allowing two-way communication both between consumption measuring devices and chargers, and between chargers, so they can send and receive information from each one and interpret it to thus agree with each other the distribution of the power available in the mains. However, said installation requires the performance of a complex digital protocol of communications and providing both the consumption measurement devices and the chargers with dedicated complex digital circuits. The patent WO2014096468A1 also describes an installation provided with a central control unit to regulate a set of controllable charges by two-way communication from dynamic information, which is received from each controllable charge in the central control unit, such as its instantaneous consumption.

Installations, such as that described in the patent JP200106978A that allow controlling the connection of a plurality of chargers to a mains based on the analysis of the total electric current consumed by a current transformer, are also known. This document presents that each charger is equipped with a relay that allows for establishing a connected or disconnected state between each charger and the mains. This document describes that the total consumed electric current is monitored by a control unit connected to a limiting device which controls the state of the relays of each charger, so that when the control unit detects that the total power consumed reaches a determined upper threshold, it acts on the different relays to maintain an adequate level of current and avoid a too high current demand, which may cause failure in the electrical installations or would require a higher cost of contracting. As described herein, this installation is especially useful for companies that use various electrical vehicles such as forklift trucks, which after working hours must be recharged. Without this installation, to charge all electric vehicles at the same time while maintaining the optimum current level in each vehicle, the company would have to contract enough power and have a mains prepared to withstand this peak demand if it wishes to recharge all the vehicles at the same time with the necessary electrical current for an efficient charge. Therefore, a recharge of all the electric vehicles is achieved by using this installation in a sequential manner, for example overnight, at the ideal recharge current without having to contract more power or requiring an installation that withstands high current peaks.

Document WO2013/157186 A1 discloses an installation with multiple chargers where the consumption of each charger is managed independently in order to use all the available power in the installation.

Document WO2013/179182 A2 discloses an installation with a single charger adapted to use all the available power in the installation.

Document EP2744070 A1 discloses a smart tap, such as an electric outlet or a tap for connecting a power plug of one of various electric appliances and household electric appliances.

It is, therefore, an object of the present invention to disclose a method and a system that avoids the actuation of the circuit breaker during the process of charging electric vehicles if, for example, other loads are connected to the mains and optimising the use of the mains if other loads are disconnected by the use of simple and more economical elements, while allowing to add chargers to or remove them from an installation to adjust the chargers' demand.

### Description of the invention

The invention is set out by the appended claims. The consumption control method for chargers of the present invention is particularly intended to control consumption for electric vehicle chargers adapted to initiate a process of charging after an electric vehicle is connected to the charger. These chargers are connected to a mains with a pre-set maximum consumption level, wherein other loads may be connected, the chargers having a pre-set individual maximum level of consumption that determines their consumption limit.

The method further comprises a sequence with a step of transmitting to the chargers a control signal with a magnitude proportional to the level of instantaneous consumption of the mains whose predetermined reference value corresponds to the maximum consumption of the mains.

Essentially, the method is characterised in that the sequence further comprises a step of varying the consumption in each charger in charging process, within its consumption limits, a same value or percentage, which is determined from the control signal received. It is expected that the formula or mode of determining this same value, which will be the same in each charger, will be predefined in all the chargers, this same value can be an absolute value, such as a number of amperes, which each charger must increase or decrease, or a relative value such as a percentage indicating the percentage of the actual consumption of each charger which must be varied, increasing or decreasing the consumption based on that percentage. Naturally, this method would also work for a single charger, which would allow controlling the consumption both of the single charger and other chargers which may be later connected to the mains and to the control signal, without requiring reconfiguration of the components previously connected to the mains.

In a variant of the invention, the value determined from the received control signal is the differential percentage between the value of the magnitude and the predetermined reference value of the magnitude.

In an alternative variant, sequence steps are performed iteratively in a periodic manner, so that the consumption of each charger can be varied at each iteration, using said value determined from the received control signal.

In another variant, it is expected that the steps of the sequence are performed when a change is detected in the instantaneous consumption level of the mains, so there is no need to modify the control signal if there are no changes in the level of instantaneous consumption of the mains.

The control signal is a current signal, which can be transported by an electrical connecting link such as an electric cable.

In another variation, the analogue magnitude is the signal amplitude, which can be generated and detected by simple analogue electronics. This analogue magnitude may also be the signal's effective value, for example, the root mean square of the amplitude, for example, the root mean square of the current intensity, thus allowing to evaluate signals in an interval. Naturally, it also provides for the use of other analogue magnitudes, such as frequency or phase.

In another variant of the invention, the electrical signal is a pulse or pulse train, performing the steps of synchronously varying consumption in each charger with the pulse or pulses. Thus is achieved that the pulse or pulses perform the function of transmitting the analogue magnitude, for example by the pulse amplitude, and the synchronisation function, for example, by its descending side. It is also envisaged that, instead of a pulse or pulse train, other forms of signal may be used, such as a sawtooth wave signal or a rectified sinusoidal signal, for example, with a full-wave rectification, so that the synchronisation may be performed with the lobes of the rectified sinusoidal signal. Naturally, the synchronisation being carried out after a certain number of lobes or pulses, is also contemplated. To synchronise new chargers being incorporated into the system, it is envisaged that the electrical signal may incorporate or be modulated with a synchronising signal, for example, a high frequency signal that is added to the electrical signal to mark when the receiver devices must perform the consumption change. Naturally, this synchronising electrical signal must be demodulated and correctly analysed by the receiver devices, which after detecting this high frequency signal will synchronously perform the consumption change. The use of a common or synchronised clock between different receiver devices to make the change is also provided. Another option would be to use signals of a different nature for the synchronisation between chargers or between receiver devices, which could be by pressure waves, such as exchanging sounds or ultrasounds, or by electromagnetic signals, such as flares or bursts of infra-red light, or other Invisible or even visible types, so that should a charger or receiver device decide to vary consumption, it would emit the corresponding signal, which would allow the rest of the chargers or receiver devices to know the moment of synchronisation. In this case, it is envisaged that each charger or receiver device has both an emitter and a receiver of the synchronising signal, for example a diode and a photo-transistor or a speaker and a microphone.

The step of transmitting the control signal to the chargers is performed by a current loop that interconnects all the chargers.

In another variant, the sequence is performed independently in each phase of the mains, so that, for example in three-phase installations systems, the consumption of each charger can be controlled in each phase.

It also discloses a charging system for electric vehicles comprising an emitter device and at least one charger control receiver device connected to a mains, said emitter device being connected to the receiver devices, i.e., a consumption control system being for chargers comprising one or more chargers, particularly chargers for electric vehicles, fitted with control receiver devices connected to a mains, and an emitter device connected to the receiver devices, in which the emitter device is provided with means for detecting the level of instantaneous consumption from the mains and means for transmitting to the control device of each charger a control signal with a magnitude proportional to the level of instantaneous consumption of the mains, whose predetermined reference value corresponds to the maximum consumption of the mains. And each control receiver device on each charger or chargers is provided with means for receiving the control signal; and means for varying the consumption of the charger or chargers it controls, within its limits of consumption, a same value, which is determined from the control signal received. Naturally, it is foreseen that the system may have one single receiver device, which controls the consumption of one or more chargers that are connected, which would allow controlling the consumption both of the chargers that are connected, and of other chargers provided with a receiver device that may be connected to the mains and to the control signal, without requiring reconfiguration of the components previously connected to the mains. It is envisaged that a receiver device may control a charger for one or more electric vehicles, as well as controlling multiple chargers or just one charger.

In a variant of the embodiment, the same value, which is determined from the received control signal is the differential percentage between the value of the magnitude and the value of the predetermined reference magnitude.

An emitter device, which is part of the system, is also disclosed, the emitter device being provided with means for detecting the level of instantaneous consumption of the mains; means for transmitting a control signal with a magnitude proportional to the instantaneous consumption of the mains with a predetermined reference value corresponding to the maximum consumption of the mains, the emitter device being adapted to be preferably connected through a current loop with one or more receiver devices.

A control receiver device for a charger, particularly an electric vehicle charger, which is part of the system, is also disclosed, the receiver device having means for receiving a control signal; and means for varying consumption of the charger during the charging process, within its limits of consumption, a same value or percentage as the other chargers, and which is determined from the control signal received. Advantageously, the chargers being each provided with said receiver device can be connected or disconnected from the system without the need to reconfigure the other receiver devices or emitter device, or manipulate the remaining system elements.

### Brief description of the drawings

In the accompanying drawings, the charging system for electric vehicles and the method for consumption control for chargers of the invention is illustrated by way of non-limiting example. In said drawings:
Fig. 1 presents a diagram of a system comprising a mains having a plurality of chargers, wherein devices may be connected for their charging, the mains being provided in addition with other external loads which may be activated;
Fig. 2 presents the system parameters of Fig. 1 during a consumption control process for chargers, according to the present invention;
Fig. 3 shows a chart with the temporal evolution of the percentage of consumption change of the chargers during the process of Fig. 2;
Fig. 4 shows a chart with the temporal evolution of the consumption of the mains during the process of Fig. 2;
Fig. 5 shows a chart with the temporal evolution of the control signal during the process of Fig. 2; and
Fig. 6 shows a chart with the temporal evolution of a variant of the control signal during the process of Fig. 2 provided with synchronisation.

### Detailed description of the drawings

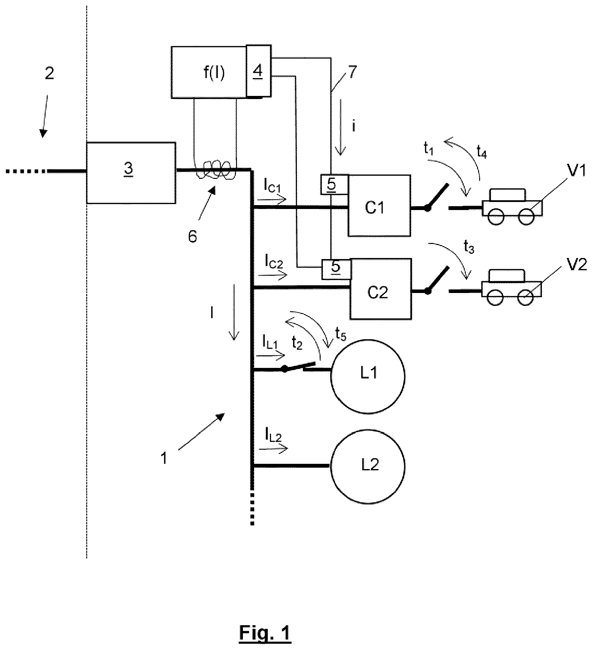

Fig. 1 shows a diagram of a charging system for electric vehicles V1, V2 of the present invention comprising a plurality of chargers C1, C2, particularly chargers C1, C2 for electric vehicles V1, V2, connected to a mains 1. Said chargers allow, as known, that when an electric vehicle V1, V2 is connected to one of the chargers C1,C2 the charger consumes energy from the mains 1 to transfer it to electric vehicles' batteries for their charge, usually following a charge cycle. In this way, the chargers C1, C2 only significantly consume electricity when they are in the charge phase, for example, chargers are known, which during the charge phase consume a maximum of 32 amps from the mains 1. Naturally, it is provided that the chargers C1, C2 allow finalising the charge of the electric vehicles V1, V2 when they detect that their batteries are charged. Once charged the electric vehicle, the charger C1, C2 will significantly cease consuming electricity from the mains 1, consuming only the electricity for its internal electronics' function, which will be much less.

As can be seen in Fig. 1, the mains 1, wherein chargers C1, C2 are connected, is separated from the public mains 2 by a circuit breaker 3, which prevents that the chargers C1, C2 as other loads L1, L2 connected to the mains 1 exceed a pre-set level of maximum consumption I_{MAX}, being said circuit breaker configured to disconnect from the mains 1 from the public mains 2 if the pre-set maximum consumption I_{MAX} is exceeded during too much time. The circuit breakers 3 have some tolerance, which allows that during a certain period of time the pre-set maximum consumption I_{MAX} is exceeded without disconnecting the mains 1 from the public mains 2, which would entail completely switching off the mains 1. Naturally, if the pre-set maximum consumption I_{MAX} is exceeded for too long, for example because too many chargers L1, L2 have been connected to the mains, whose consumption amply exceeds the pre-set maximum consumption I_{MAX}, the circuit breaker 3, will disconnect the mains 1 from the public mains 2.

The mains 1 of Fig. 1 has, in addition to two chargers C1, C2, that may be for electrical vehicles V1, V2 but also could serve to charge other devices or control batteries or accumulators, two loads L1, L2 connected to said mains 1. Naturally it is envisaged that the mains 1 may be much larger and have chargers C1, C2 and loads L1, L2. These loads L1, L2 may be, for example, machines or domestic appliances that may have a high consumption, such as a refrigerator, a boiler, or a lift motor. A user may possess certain knowledge of the pre-set maximum consumption I_{MAX} of its mains 1 since it corresponds with the power contracted from the electricity company, by which means a user could intuitively know the maximum number of loads that it can connect simultaneously, knowing their consumption, without this actuating the circuit breaker 3. However, the user is not always so far-sighted and it is very likely that if he/she actuates loads L1, L2 during the process of charging an electric vehicle using chargers C1, C2, it will exceed the pre-set maximum consumption I_{MAX} long enough for the circuit breaker 3 to actuate.

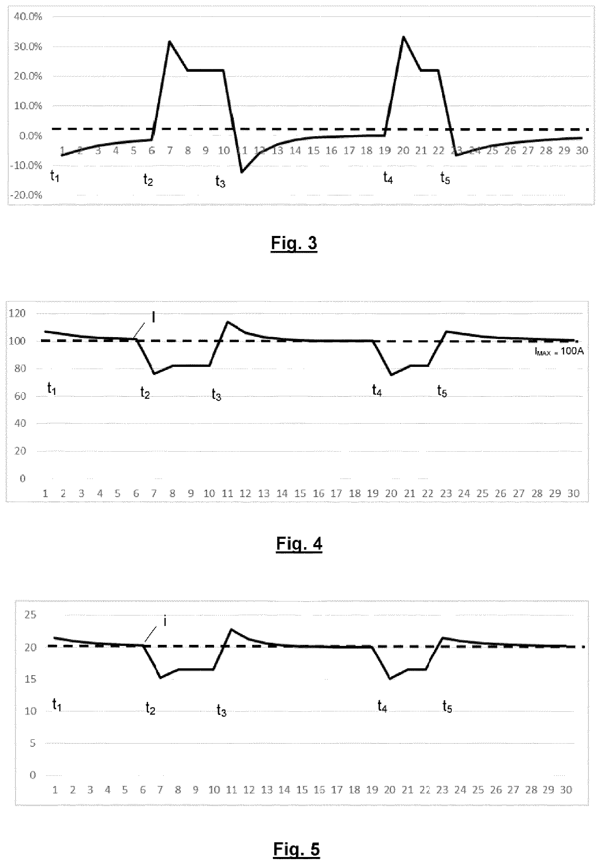

As can be seen in Fig. 1, the mains 1 has an emitter device 4 connected to respective receiver devices 5 of each charger C1, C2. Naturally, these receiver devices 5 can be integrated in the charger C1, C2 or be a control accessory device of each charger C1, C2. The emitter device 4 is provided with means for detecting the level of instantaneous consumption 6 of the mains 1, formed, for example, by a coil arranged around a cable of the mains 1, through which the current flows to the chargers C1, C2 and the loads L1, L2. In the coil a current will be induced proportional to the total current consumed by the mains 1 so that the emitter device 4 knows the instantaneous consumption of the mains 1. The emitter device 4 will perform a transformation based on the value of the instantaneous consumption of the mains 1 to generate a control signal 'i' with a magnitude proportional to the level of instantaneous consumption of the mains 1, whose predetermined reference value corresponds to the maximum consumption of the mains. Said control signal 'i' is preferably a current signal, wherein the analogue magnitude will be the amplitude of the control signal 'i', thereby facilitating its detection. Also, it is envisaged that the analogue magnitude could be its effective value, so that signals may be used where it is not a requisite to determine their amplitude at a given moment, but the effective value may be valued, such as the root mean square value of the voltage or current, such as a rectified sinusoidal signal. In the variant represented, the transformation to be performed will be a multiplication by 0.0002, so that when the current 'I' from the mains 1 is 100A, the amplitude of the signal control 'i' will be 20mA, that will be the predetermined reference for the magnitude. It is envisaged the transformation to be different in other variants of embodiments. For example, is has been observed that the ratio may be such that the maximum amplitude of the control signal 'i' or its maximum effective value is of 50mA. If a signal is used, whose maximum effective value is of 50mA instead of 20mA, the immunity of the signal to noise is increased, since it is expected that the environment in which the system works is noisy and has a high level of interference with the mains 1. Also, using a signal with greater effective value, for example a sinusoidal signal that may be preferably a full-wave rectification signal, allows using a lower current transformer, which requires less transformation ratio and therefore a lower number of spirals, that reduces the use of copper and the winding time. Naturally, the emitter devices 4 and receiver devices 5 have to be previously adapted to use the same type of control signal 'i'. As this transformation is a multiplication, the current consumption of the mains and the control signal will be proportional, as will be seen later in the temporal evolutions of an embodiment, illustrated in Figs. 4 and 5. The emitter device 4 sends this control signal 'i' through means for transmitting to the control receiver devices 5 of each charger, which may be a current loop 7 as shown in Fig. 1.

It is foreseen that the device emitter 4 has a transformer provided with a coil acting as a means for detecting the level of instantaneous consumption 6 from the mains 1. This transformer can be selected depending on the limit of the thermo-magnetic breaker or circuit breaker 3 of the mains 1, which is what will determine the maximum current value to be allowed into the mains 1 before disconnection from the public mains 2. Thus, there will be a particular emitter device 4 for each breaker 3, which may be used in installations with a circuit breaker of the same limit without requiring any adaptation. This advantageously allows to manufacture a small number of models of emitter device 4, which can be used in mains 1 with each of the known circuit breakers 3.

Advantageously, the system and method of the present invention allows adding or removing chargers C1, C2 simply by connecting or removing them from the mains 1 and the current loop 7, without having to modify or reconfigure other devices in the system, since their consumption will be automatically regulated up to the pre-set maximum consumption level I_{MAX} of the mains 1. This allows that chargers C1, C2 may be added or removed with great ease from an installation already assembled, being able to adapt the number of chargers C1, C2 of the installation as required at all times. In this way it is advantageously achieved that the chargers C1, C2 can be identical and have the same programming and configuration, allowing their line production without requiring adaptation to each installation before their installation.

In addition, it is expected that emitter devices 4 and receiver devices 5 use the same control signal 'i', i.e. they are adapted to emit and receive respectively the same signal to achieve correctly transmitting information on the level of consumption of the mains. For example, said control signal 'i' may be a full-wave rectified sinusoidal signal with effective value of 50mA, or peak of 50mA, as applicable and more convenient. This enables the replacement of a damaged emitter device 4 or a receiver device 5 which controls a charger C1, C2 in a very simple way, simply substituting or replacing the charger assembly and the receiver device if these are integrated into a single component. In addition, this enables the individual marketing of both emitter devices 4 and receiver devices 5, integrated or not with a charger C1, C2 for integration into a control system as described.

Each control receiver device 5 of each charger C1, C2 is provided with means for receiving the control signal 'i', for example, a resistance wherein the voltage is measured at its end, which will be proportional to the amplitude of the control signal 'i' or a coil wound on the current loop, which will induce a current proportional to the amplitude of the control signal 'i'. The receiver devices 5 are also provided with means for varying the consumption of the charger, such as electronics, which indicate to the charger C1, C2 the consumption to be taken from the mains 1, within its limits of consumption, a same value or percentage for all chargers, which is determined from the control signal 'i' received. Naturally the means for varying the consumption of the charger can be internal elements of the charger C1, C2, as shown in Fig. 1. It is also envisaged that both the receiver devices 5 and the means for varying consumption of the charger may be a separate element which is connected between the mains 1 and the charger C1, C2, and already delivering to the charger C1, C2 the current which it is to consume. Thus, the receiver devices 5 can be incorporated so that chargers C1, C2, which are not designed to adjust their consumption, such as those that may be previously available in an installation, may be used. Thus, it is not necessary to replace the present chargers C1, C2 in an installation but these can be adapted to operate according to the method of the present invention interposing the receiver device 5 with means for varying the consumption of the charger between the charger C1, C2 and the mains 1. In installations wherein previously were chargers C1, C2 that were not prepared to operate according to the method of the present invention and wherein said chargers C1, C2 had not been adapted as indicated above, said chargers C1, C2 are considered as other loads L1, L2.

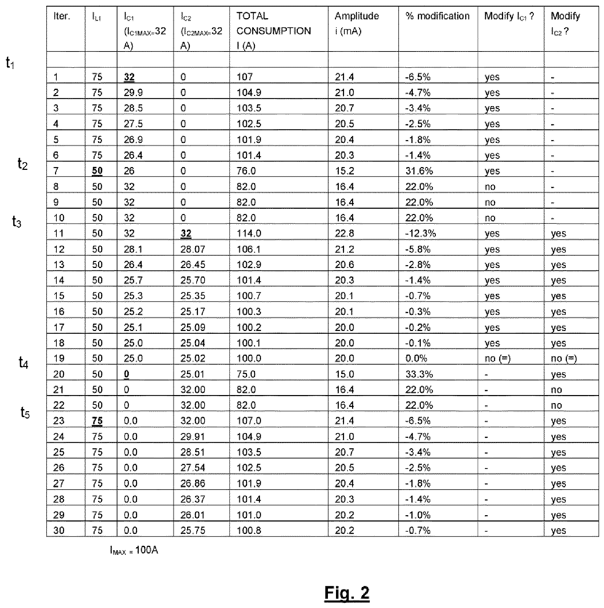

Fig. 2 presents a Table with the evolution of the different parameters of the system shown in Fig. 1 during the embodiment of the method of consumption control for chargers of the present invention, and in which, as an example, different events are indicated at different instants of time t₁, t₂, t₃, t₄, t₅ such as connection or disconnection of electric vehicles V1, V2 for their charging and the connection or disconnection of other loads L1, L2 to be able to illustrate the evolution of consumption of the mains and how chargers C1, C2 adjust to adapt themselves to the rest of the needs of the mains 1.

From the evolution of the different parameters shown in the Table of Fig. 2, of which the most representative are graphically illustrated in the charts shown in Figs. 3 to 5, the performance of the system during the embodiment of the method can be clearly observed. As can be seen, at all times the satisfactory adjustment of the consumption of chargers C1, C2 according to the demands of the other loads L1, L2 is achieved, maximising the allowable consumption by the circuit breaker 3 from the mains 1, so that the consumption of chargers C1, C2, when connecting or disconnecting other loads L1, L2, is adjusted.

Specifically, starting from an initial situation of the system, wherein only two loads L1, L2 are connected to the mains 1, whose total consumption I_{L1}+ I_{L2} is of 75A, being the pre-set maximum consumption level I_{MAX} of the mains 1 of 100A, in a first instance t₁ a first electric vehicle V1 is connected to the first charger C1. In this first moment, the charger C1 will consume from the mains 1 its pre-set individual maximum level of consumption I_{C1MAX}, which is part of the intrinsic characteristics of each charger C1, C2 and that will, in this case, be of 32A. The purpose of initially consuming the pre-set individual maximum consumption I_{C1MAX} is to provide the electric vehicle V1 connected to said charger C1 with the greatest amount of energy available for its charging.

As can be seen, on the charger C1 initially consuming the pre-set individual maximum consumption I_{C1MAX} the total consumption 'I' of the mains 1 will be of 107A, higher than the pre-set maximum consumption level I_{MAX} of the mains 1 of 100A. If this situation continues for a while, the circuit breaker 3 will disconnect the mains 1 from the public mains 2, a situation that would be an inconvenience for users of the mains 1, since all the elements connected to the mains 1 would no longer be fed until the connection of the circuit breaker 3 is restored, and it would also be necessary to disconnect some of the loads L1, L2 or the charger C1 to prevent further disconnection of the circuit breaker 3.

Advantageously, the method comprises performing iterations, for example every 100 ms, although they may be increased to, for example, every 5 seconds, wherein in each iteration the step of transmitting to the chargers C1, C2 a control signal 'i' with a magnitude proportional to the instantaneous consumption of the mains 1, whose maximum reference value corresponds to the maximum consumption of the mains 1, is performed, and the step of varying consumption in each charger C1, C2 in the charging process, within their consumption limits a percentage which is determined from the control signal 'i' received, specifically in the variant of the embodiment shown, this percentage will be the differential percentage between the value of the magnitude and a predetermined reference value of the magnitude, the predetermined reference value being of 20mA , whose temporal evolution is shown graphically in Fig. 3. With this interval of time between iterations it is achieved that, although the level of consumption of chargers C1, C2 slightly exceeds the pre-set maximum consumption level I_{MAX} of the mains 1, the circuit breaker 3 is maintained within its tolerance margin and said time interval between iterations allows to regulate the consumption of the chargers in successive iterations adjusting it to the pre-set maximum consumption level I_{MAX} before the circuit breaker 3 disconnect the mains 1. Naturally, it is envisaged that in other embodiment variants the variation of the consumption in each charger C1, C2 can be a fixed value, such as a determined number of amperes in which the consumption of each charger C1, C2 should be increased or decreased according to what the control signal 'i' indicates that should be increased or decreased consumption. It is also envisaged the variation of consumption in each charger to be a fixed percentage, such as 10 %, which will be of increase or decrease depending on whether the control signal 'i' indicates that the consumption should be increased or decreased, for example, depending on the sign of the differential percentage between the value of the magnitude and a predetermined reference value of the magnitude. This percentage should be high enough to allow rapid adjustment of the system in an overload situation, but not too high, because the system will oscillate unsteadily. Also it is provided that the time interval between iterations may be different, being able to adjust this interval during configuration of the system depending on the characteristics of the circuit breaker 3, such as its consumption tolerance or the time it takes to disconnect the mains 1 following exceeding of the pre-set maximum consumption level I_{MAX}. Naturally, the time interval between iterations and the fixed percentage of variation will be associated. It has been observed that, when the time between iterations is 5 seconds and the percentage fixed to increase or decrease the consumption is 10 %, a stable system is achieved, which allows the system with known circuit breakers no to overload. It is highlighted that, when the fixed percentage is 10 %, it is achieved that the system is not overloaded and does not oscillate unsteadily.

Thus, iteratively performing the sequence at each iteration, shown in Fig. 2 between the iterations 1 and 6 it is achieved that the first charger C1 will modify and adjust its consumption according to the differential percentage, so that total consumption 'I' of the mains 1 asymptotically tends to be 100A, such as can be seen in Fig. 4. In turn, it is observed that the percentage determined from the control signal 'i', shown in Fig. 3 also asymptotically tends to be 0 %, point at which the system would be balanced. If more iterations had been performed without making changes to the system after iteration 6, the balanced situation would have been achieved, in which the total consumption 'I' of the mains 1 was 100A, being 75A the consumption of the loads L1 and L2 and 25A the consumption of the first charger C1.

However, following the iteration 6 and at a second instant t₂ a first load L1 is disconnected, whose consumption was of 25A, so that the consumption of the chargers L1 and L2 will now be of only 50A. At that time, on 25A being available, it is observed that the method adjusts the consumption of the first charger C1 increasing its consumption from 26A, to which it was limited in iteration 7, to its maximum consumption of 32A, which it reaches in iteration 8. At this point, the consumption of the first charger C1 may not increase even if the control signal 'i' so permits, since this will have reached its pre-set maximum level of individual consumption I_{C1MAX}. From this moment on, the control signal 'i' will still indicate that it is possible to increase the consumption of the first charger C1 but this will not be possible, with which a new balanced point, presented as a horizontal section in Figs. 3 to 5, in this way until reaching iteration 10, will be reached.

After iteration 10, in a third instant t₃ a second electric vehicle V2 is connected to the second charger C2, so that either by automatically detecting the presence of the second electric vehicle V2 connected, or because the user indicates to the second charger C2 that it has a second electric vehicle V2 connected, for example, using a button, the second charger C2 starts to consume power from the mains 1. In the variant shown, the second charger C2 has the same pre-set individual maximum consumption level I_{C2MAX} as the first charger C1, of 32A, although it may be different. Therefore, just as above with the first charger C1, the second charger starts consuming a value equal to its pre-set individual maximum consumption I_{C2MAX}, this means that along with the rest of the connected loads L1, L2, the consumption of the mains rises to 114A. Advantageously, from that iteration 11, the method of the present invention allows to adjust the consumption of both chargers C1, C2, so that it achieves a balanced situation in the iteration 19, wherein the load L2 consumes 50A, and both the first charger C1 and the second charger consume 25A, the total consumption 'I' of the mains 1 being of 100A, i.e., the pre-set maximum consumption level I_{MAX} of the mains 1. From this moment, the modification of consumption of each charger is of 0 %, therefore its adjustment is not necessary.

However, following the iteration 19 in which the system is balanced, in a fourth instant t₄ the first charger C1 completes the charging of the first electric vehicle V1, therefore it ceases consuming from the mains. This allows that, in the following iterations, the consumption released by the first charger C1 can be advantageously used by the second charger C2, whose consumption increases to its limit of 32A, from which it can not increase further and the system returns to being balanced with a consumption of the mains of 75A.

After iteration 22, wherein the system is balanced, in a fifth instant t₅ the first charger C1, which requires 25A, is reconnected, so that the consumption of the mains 1 is raised to 107A. Advantageously, as can be seen in the following iterations, the consumption of the second charger C2, which is still consuming, is regulated asymptotically until it is reduced to 25A, thereby the consumption from the mains 1 tending to be 100A, preventing that the circuit breaker disconnects from the mains 1.

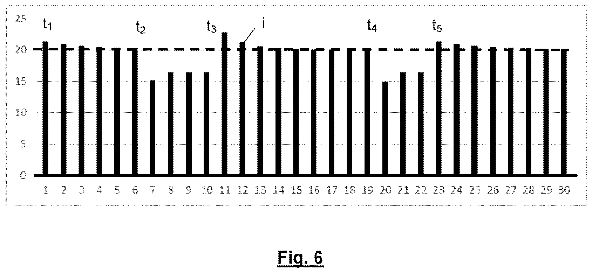

It is foreseen that changes in all the chargers C1, C2 are performed synchronously and simultaneously in all of them, therefore it is provided that there may be a means of synchronisation such as a common clock or internal clocks synchronised with each other to identify the instant when a new iteration of the method should be made, performing a new iteration every so often in a periodic manner. It is foreseen that the control signal 'i' itself may be that which performs this function of synchronisation, for example the control signal 'i' presented in Fig. 6 as a pulse train, whose amplitude is the value of the magnitude to be transmitted, which would allow the adjustment in all the chargers C1, C2 at the same time in a synchronised manner with its descending flank, for example.

The time between synchronisations should be such to allow sufficient time to perform the adjustment and the vehicle to be able to react to the new current value, since the charger C1, C2 should preferably warn the corresponding vehicle V1, V2 of the current charge, for example, in a manner known, in Mode 3 by the change of the PWM pulse of the pilot control signal CP. However, said time between synchronisations should not be too long so as to overload the installation for too long and end up activating the thermo-magnetic breaker. It has been determined that a time between synchronisations, which allows the vehicle to adapt and avoid activating the thermo-magnetic breaker is 5 seconds, so the period of control signal 'i' that may be used to control the synchronisation may have a period of 5 seconds.

It is envisaged that said control signal 'i' could be a rectified sinusoidal signal, for example, full-wave rectified signal, so that the lobes of the rectified sinusoidal signal may be advantageously used to control the synchronisation between the chargers C1, C2. When the means for detecting the level of instantaneous consumption 6 from the mains 1 are a coil arranged around a cable of the mains 1, this form of sinusoidal signal is already advantageously obtained on said coil, avoiding having to consequently generate the signal and, therefore, simplifying the generation of the control signal 'i'. Naturally, the amplitude or effective value of this signal will have to adapt as necessary to transmit the proportional magnitude to the instantaneous consumption level of the mains.

If the frequency of the control signal 'i' is desired to be different from the frequency of the mains 1, to establish the frequency of synchronisation, it will be necessary to properly modulate the signal directly obtained by the coil, which will be of 50 Hz or 60 Hz, through its multiplication by another sinusoidal signal and subsequent filtering. This operation will be similar to an amplitude modulation, to obtain, firstly, a sinusoidal signal whose period is 10 seconds, which after being rectified to full-wave will double the frequency, reducing the period to 5 seconds, which is the correct synchronisation time, adapting the amplitude of each lobe so that the effective value of each lobe is the proportional magnitude to the instantaneous consumption level of the mains 1 with the predetermined reference value which corresponds to the maximum consumption of the mains 1.

This modulation may be performed in a known manner through analogue components, thus avoiding having to enter digital steps that would make the emitter device 4 more expensive and complicated. Also advantageously, on rectifying the resulting signal in the emitter device 4 having to rectify the control signal 'i' in each receiver 5 is avoided, which simplifies the necessary electronics in each receiver 5. It also prevents that the transformer which incorporates the emitter device 4 having different rectifier bridges, one for each receiver device 5, which would make it non linear.

It is also envisaged that the control signal 'i' is obtained from a sinusoidal signal having the frequency of the mains, for example 50 Hz, avoiding having to vary the frequency of the signal obtained by the coil, and simply having to vary its amplitude as appropriate. In this way, the rectified full-wave signal will have a frequency of 100 Hz, the duration of each lobe being 10 ms, so the update of each charger can be performed synchronously every 500 lobes, for example, counting them from the same instant, to establish iterations or synchronisation every 5 seconds. To change the space between iterations, another pre-set or configurable number of lobes could simply be counted, for example through a configuration frame periodically injected into the control signal 'i'. Naturally, it is also provided that the system only has one single charger, in this case it would not be necessary to contemplate the synchronisation between chargers or receiver devices 5.

It is also envisaged that the sequence only occurs when a change in the instantaneous consumption level of the mains 1 is detected, so that, after reaching a balanced position the need to perform a new iteration is not indicated if a change in the level of instantaneous consumption of the mains 1 is not detected.

Naturally, although the system shown in Fig. 1 is a single-phase electrical system, in which the sequence is performed in its single phase, it is expected that the system and the method can be also performed in three-phase circuits, making the adjustment sequence independently in each phase from the mains.

## Claims

1. A method for consumption control for chargers (C1, C2), particularly for chargers of electric vehicles (V1, V2) adapted to start a charging process after connecting an electric vehicle to the charger, said chargers being connected to a mains (1) with a pre-set maximum consumption level (I_{MAX}), wherein there may be other connected loads (L1, L2), and the chargers having a pre-set individual maximum consumption level (I_{C1MAX}, I_{C2MAX}) that determines their consumption limit, the method comprising a sequence with
a step of transmitting a current control signal (i) from an emitter device (4) provided with means for detecting an instantaneous consumption level of the mains (1) to receiver devices (5) of the chargers with a magnitude proportional to the instantaneous consumption level (I) of the mains with a predetermined reference value that corresponds to the maximum consumption level (I_{MAX}) of the mains,
**characterised in that** the sequence also comprises the step of varying the consumption in all the chargers in the charging process, within their limits of consumption, by a same value or percentage, which is determined from the current control signal received, reducing the consumption of the chargers so that the overall consumption is below the maximum consumption level of the mains, wherein the step of transmitting the current control signal from the emitter device to the receiver devices of the chargers is performed by a current loop (7), wherein the current loop interconnects all the chargers.

2. The method according to the preceding claim, **characterised in that** the value determined from the control signal (i) received is the differential percentage between the value of the magnitude and its predetermined reference value.

3. The method according to any one of the preceding claims, **characterised in that** the sequence steps are performed iteratively.

4. The method according to the preceding claim, **characterised in that** the sequence steps are performed iteratively in a periodic manner.

5. The method according to any one of claims 1 to 3, **characterised in that** the steps of the sequence are performed when a change is detected in the instantaneous consumption level of the mains.

6. The method according to any one of the preceding claims, **characterised in that** the magnitude is the amplitude or effective value of the current control signal (i).

7. The method according to any of the preceding claims **characterised in that** the control signal (i) is a pulse train or a rectified sinusoidal signal, performing the steps of varying consumption in all the chargers (C1, C2) in the charging process in a synchronised manner with each pulse of the pulse train or with each lobe of the rectified sinusoidal signal.

8. The method according to any one of the preceding claims, **characterised in that** the sequence is performed in an independent manner in each phase of the mains (1).

9. A system for consumption control for chargers (C1, C2) comprising one or more chargers (C1, C2), particularly chargers for electric vehicles (V1, V2), provided with control receiver devices (5), connected to a mains (1), and an emitter device (4) connected to the receiver devices, wherein:
a) the emitter device is provided with
- means for detecting an instantaneous consumption level of the mains;
- means for transmitting a current control signal (i) with a magnitude proportional to the instantaneous consumption level (I) of the mains with a predetermined reference value corresponding to the maximum consumption level (I_{MAX}) of the mains and
b) each control receiver device is provided with
- means for receiving the current control signal (i); and
- means for varying consumption of each charger in the charging process, within its consumption limits, by a same value or percentage, which is determined from the current control signal (i) received, reducing the consumption of the chargers so that the overall consumption is below the maximum consumption level of the mains;
wherein the emitter device (4) is connected to the receiver devices (5) of the respective chargers (C1, C2) through a current loop (7), that interconnects all the chargers, for transmitting the current control signal from the emitter device to the receiver devices of the chargers

10. The system according to the preceding claim, **characterised in that** the means for varying consumption of the charger in the charging process are adapted to vary consumption of the charger a percentage, which is the differential percentage between the magnitude value and a predetermined reference value of the magnitude.

## Patentansprüche

1. Verfahren zur Verbrauchsregelung für Ladegeräte (C1, C2), insbesondere für Ladegeräte von Elektrofahrzeugen (V1, V2), welche dazu angepasst sind, einen Ladeprozess anzufangen, nachdem ein Elektrofahrzeug an das Ladegerät angeschlossen wird, wobei die genannten Ladegeräte an einem Stromversorgungsnetz (1) mit einem vorgegebenen maximalen Verbrauchsniveau (I_{MAX}) angeschlossen sind, wobei es andere angeschlossene Lasten (L1, L2) geben kann, und wobei die Ladegeräte ein vorgegebenes individuelles maximales Verbrauchsniveau (I_{C1MAX}, I_{C2MAX}) aufweisen, welches deren Verbrauchsgrenze bestimmt, wobei das Verfahren eine Sequenz umfasst, mit
einem Schritt des Übertragens eines Stromsteuersignals (i) aus einer Sendevorrichtung (4), welche mit Mitteln zum Erfassen eines momentanen Verbrauchsniveaus des Stromversorgungsnetzes (1) versehen ist, auf Empfangsvorrichtungen (5) der Ladegeräte mit einer Größe, welche zum momentanen Verbrauchsniveau (l) des Stromversorgungsnetzes mit einem vorbestimmten Referenzwert, welcher dem maximalen Verbrauchsniveau (I_{MAX}) des Stromversorgungsnetzes entspricht, proportional ist,
**dadurch gekennzeichnet, dass** die Sequenz auch den Schritt des Variierens des Verbrauchs in allen Ladegeräten im Ladeprozess, innerhalb dessen Verbrauchsgrenzen, um einen gleichen Wert oder Anteil umfasst, welcher aus dem empfangenen Stromsteuersignal bestimmt wird, indem der Verbrauch der Ladegeräte derart verringert wird, dass der Gesamtverbrauch unter dem maximalen Verbrauchsniveau des Stromversorgungsnetzes liegt, wobei der Schritt des Übertragens des Stromsteuersignals aus der Sendevorrichtung auf die Empfangsvorrichtungen der Ladegeräte mittels einer Stromschleife (7) durchgeführt wird, wobei die Stromschleife alle Ladegeräte miteinander verbindet.

2. Verfahren nach dem vorhergehenden Anspruch, **dadurch gekennzeichnet, dass** der aus dem empfangenen Steuersignal (i) bestimmten Wert der Differenzialanteil zwischen dem Wert der Größe und dessen vorbestimmten Referenzwert ist.

3. Verfahren nach einem der vorhergehenden Ansprüche, **dadurch gekennzeichnet, dass** die Sequenzschritte iterativ durchgeführt werden.

4. Verfahren nach dem vorhergehenden Anspruch, **dadurch gekennzeichnet, dass** die Sequenzschritte iterativ und periodisch durchgeführt werden.

5. Verfahren nach einem der Ansprüche 1 bis 3, **dadurch gekennzeichnet, dass** die Schritte der Sequenz durchgeführt werden, wenn eine Änderung beim momentanen Verbrauchsniveau des Stromversorgungsnetzes erfasst wird.

6. Verfahren nach einem der vorhergehenden Ansprüche, **dadurch gekennzeichnet, dass** die Größe die Amplitude oder der Effektivwert des Stromsteuersignals (i) ist.

7. Verfahren nach einem der vorhergehenden Ansprüche, **dadurch gekennzeichnet, dass** das Steuersignal (i) eine Impulsfolge oder ein gleichgerichtetes Sinussignal ist, wobei die Schritte des Variierens des Verbrauchs in allen Ladegeräten (C1, C2) im Ladeprozess mit jedem Impuls der Impulsfolge oder mit jeder Keule des gleichgerichteten Sinussignals synchronisiert durchgeführt werden.

8. Verfahren nach einem der vorhergehenden Ansprüche, **dadurch gekennzeichnet, dass** die Sequenz in jeder Phase des Stromversorgungsnetzes (1) unabhängig durchgeführt wird.

9. System zur Verbrauchsregelung für Ladegeräte (C1, C2) umfassend eines oder mehrere Ladegeräte (C1, C2), insbesondere Ladegeräte für Elektrofahrzeugs (V1, V2), welche mit Steuerempfangsvorrichtungen (5), welche am Stromversorgungsnetz (1) angeschlossen sind, und eine Sendevorrichtung (4), welche an den Empfangsvorrichtungen angeschlossen ist, versehen sind, wobei:
a) die Sendevorrichtung mit Folgendem versehen ist
- Mitteln zum Erfassen eines momentanen Verbrauchsniveaus des Stromversorgungsnetzes;
- Mitteln zum Übertragen eines Stromsteuersignals (i) mit einer Größe, welche zum momentanen Verbrauchsniveau (l) des Stromversorgungsnetzes mit einem vorbestimmten Referenzwert, welcher dem maximalen Verbrauchsniveau (I_{MAX}) des Stromversorgungsnetzes entspricht, proportional ist, und
b) jede Steuerempfangsvorrichtung mit Folgendem versehen ist
- Mitteln zum Empfangen des Stromsteuersignals (i); und
- Mitteln zum Variieren des Verbrauchs jedes Ladegeräts im Ladeprozess, innerhalb dessen Verbrauchsgrenzen, um einen gleichen Wert oder Anteil, welcher aus dem empfangenen Stromsteuersignal (i) bestimmt wird, indem der Verbrauch der Ladegeräte derart verringert wird, dass der Gesamtverbrauch unter dem maximalen Verbrauchsniveau des Stromversorgungsnetzes liegt;
wobei die Sendevorrichtung (4) an den Empfangsvorrichtungen (5) der jeweiligen Ladegeräte (C1, C2) über eine Stromschleife (7) angeschlossen ist, welche alle Ladegeräte miteinander verbindet, um das Stromsteuersignal aus der Sendevorrichtung auf die Empfangsvorrichtungen der Ladegeräte zu übertragen.

10. System nach dem vorhergehenden Anspruch, **dadurch gekennzeichnet, dass** die Mittel zum Variieren des Verbrauchs des Ladegeräts im Ladeprozess dazu angepasst sind, den Verbrauch des Ladegeräts um einen Anteil zu variieren, welcher der Differenzialanteil zwischen dem Größenwert und einem vorgegebenen Referenzwert der Größe ist.

## Revendications

1. Procédé de régulation de la consommation pour des chargeurs (C1, C2), particulièrement pour des chargeurs de véhicules électriques (V1, V2) adaptés pour initier un processus de charge après avoir connecté un véhicule électrique au chargeur, lesdits chargeurs étant connectés à un réseau électrique (1) avec un niveau de consommation maximale préétabli (I_{MAX}), dans lequel il peut y avoir d'autres charges connectées (L1, L2), et les chargeurs ayant un niveau de consommation maximale individuelle préétabli (I_{C1MAX}, I_{C2MAX}) qui détermine leur limite de consommation, le procédé comprenant une séquence avec
une étape de transmission d'un signal de régulation de courant (i) depuis un dispositif émetteur (4) doté de moyens pour détecter un niveau de consommation instantanée du réseau électrique (1) jusqu'à des dispositifs récepteurs (5) des chargeurs avec une magnitude proportionnelle au niveau de consommation instantanée (l) du réseau électrique avec une valeur de référence prédéterminée qui correspond au niveau de consommation maximale (I_{MAX}) du réseau électrique,
**caractérisé en ce que** la séquence comprend en outre l'étape de faire varier la consommation dans tous les chargeurs dans le processus de charge, dans leurs limites de consommation, d'une même valeur ou pourcentage, qui est déterminé à partir du signal de régulation de courant reçu, réduisant la consommation des chargeurs de façon à ce que la consommation globale soit en dessous du niveau de consommation maximale du réseau électrique, dans lequel l'étape de transmettre le signal de régulation de courant depuis le dispositif émetteur jusqu'aux dispositifs récepteurs des chargeurs est réalisée au moyen d'une boucle de courant (7), dans lequel la boucle de courant interconnecte tous les chargeurs.

2. Procédé selon la revendication précédente, **caractérisé en ce que** la valeur déterminée à partir du signal de régulation (i) reçu est le pourcentage différentiel entre la valeur de la magnitude et sa valeur de référence prédéterminée.

3. Procédé selon l'une quelconque des revendications précédentes, **caractérisé en ce que** les étapes de séquence se réalisent itérativement.

4. Procédé selon la revendication précédente, **caractérisé en ce que** les étapes de séquence se réalisent itérativement de manière périodique.

5. Procédé selon l'une quelconque des revendications 1 à 3, **caractérisé en ce que** les étapes de la séquence se réalisent lorsqu'un changement est détecté dans le niveau de consommation instantanée du réseau électrique.

6. Procédé selon l'une quelconque des revendications précédentes, **caractérisé en ce que** la magnitude est l'amplitude ou valeur efficace du signal de régulation de courant (i).

7. Procédé selon l'une quelconque des revendications précédentes, **caractérisé en ce que** le signal de régulation (i) est un train d'impulsions ou un signal sinusoïdal redressé, qui réalise les étapes de variation de la consommation dans tous les chargeurs (C1, C2) dans le processus de charge de manière synchronisée avec chaque impulsion du train d'impulsions ou avec chaque lobe du signal sinusoïdal redressé.

8. Procédé selon l'une quelconque des revendications précédentes, **caractérisé en ce que** la séquence est réalisée d'une manière indépendante dans chaque phase du réseau électrique (1).

9. Système de régulation de la consommation pour des chargeurs (C1, C2) qui comprend un ou plusieurs chargeurs (C1, C2), particulièrement des chargeurs pour des véhicules électriques (V1, V2), dotés de dispositifs récepteurs de régulation (5), connectés à un réseau électrique (1), et un dispositif émetteur (4) connecté aux dispositifs récepteurs, dans lequel :
a) le dispositif émetteur est doté de
- moyens pour détecter un niveau de consommation instantanée du réseau électrique ;
- moyens pour transmettre un signal de régulation de courant (i) avec une magnitude proportionnelle au niveau de consommation instantanée (l) du réseau électrique avec une valeur de référence prédéterminée correspondant au niveau de consommation maximale (I_{MAX}) du réseau électrique et
b) chaque dispositif récepteur de régulation est doté de
- moyens pour recevoir le signal de régulation de courant (i) ; et
- moyens pour faire varier la consommation de chaque chargeur dans le processus de charge, dans ses limites de consommation, d'une même valeur ou pourcentage, qui est déterminé à partir du signal de régulation de courant (i) reçu, réduisant la consommation des chargeurs de sorte que la consommation globale est en dessous du niveau de consommation maximale du réseau électrique ;
dans lequel le dispositif émetteur (4) est connecté aux dispositifs récepteurs (5) des chargeurs respectifs (C1, C2) à travers une boucle de courant (7), qui interconnecte tous les chargeurs, pour transmettre le signal de régulation de courant depuis le dispositif émetteur jusqu'aux dispositifs récepteurs des chargeurs.

10. Système selon la revendication précédente, **caractérisé en ce que** les moyens pour faire varier la consommation du chargeur dans le processus de charge sont adaptés pour faire varier la consommation du chargeur d'un pourcentage, qui est le pourcentage différentiel entre la valeur de magnitude et une valeur de référence prédéterminée de la magnitude.
